# EUROPÄISCHE PATENTSCHRIFT

(11) **EP 2 037 139 B1**
(45) Veröffentlichungstag und Bekanntmachung des Hinweises auf die Patenterteilung: **13.02.2013**
(21) Anmeldenummer: 08015003.0
(22) Anmeldetag: 26.08.2008
(51) Int. Cl.: F01D 3/02, F01D 3/04, F04D 29/041, F04D 29/051, F16C 32/06, F16C 39/04

(54) **Axialschubentlastungseinrichtung**
Axial thrust relief device
Dispositif de déchargement de poussée axiale

(30) Priorität: 13.09.2007 DE 102007043764
(43) Veröffentlichungstag der Anmeldung: 18.03.2009
(73) Patentinhaber: Voith Patent GmbH, 89522 Heidenheim (DE)
(72) Erfinder: Schirle, Hans, 74597 Stimpfach (DE); Graf, Hartmut, 73660 Urbach (DE); Rosovits, Michael, 74564 Crailsheim (DE)
(74) Vertreter: Weitzel, Wolfgang

(56) Entgegenhaltungen:
- EP-B1- 0 461 131
- DE-A1- 1 453 787
- DE-A1- 2 252 495
- US-A- 4 660 995

## Beschreibung

Die Erfindung betrifft eine Axialschubentlastungseinrichtung und insbesondere zur Verwendung für einen regelbaren Antrieb mit einer hydrodynamischen Komponente.

Axialschubentlastungseinrichtungen zur Entlastung von Axiallagern einer Maschinenwelle sind in unterschiedlichen Bauformen für Pumpen und Turbomaschinen bekannt. Dabei können die Entlastungselemente scheibenförmig oder kolbenförmig ausgebildet sein und eine zugeordnete Druckkammer aufweisen, in der mittels einer Regelungseinheit ein dem Achsschub entgegenwirkender Druck aufgebaut wird. Solchermaßen aktiv geregelte Axialschubentlastungseinrichtungen werden beispielsweise durch die US 4 884 942, die JP 09170401 und die DE 100 05 309 offenbart.

Nachteilig an einer Druckbeaufschlagung eines Ausgleichskolbens mittels eines geschlossenen Regelkreises ist der konstruktive Aufwand, der für die Realisierung der Sensorik zur Ermittlung des Achsschubs, der Regelungseinheit und der den Gegendruck erzeugenden Stellelemente notwendig ist. Bevorzugt wird daher eine passive Axialschubentlastungseinrichtung, so dass auf eine Regelungs- oder Steuerungseinrichtung verzichtet werden kann.

Passive Systeme zur unidirektionalen Schubentlastung werden beispielsweise durch die DE 1 709 611 U und die DE 1 453 787 A offenbart. Hieraus gehen Schubausgleichskolben hervor, die in Form eines Druckraums ausgebildet sind, der eingangs- und ausgangsseitig Drosselelemente aufweist, die durch eine axiale Bewegung der abzufangenden Maschinenwelle reziprok geöffnet und geschlossen werden. Bewegt sich beispielsweise die Maschinenwelle derart, dass die Eingangsdrossel öffnet und entsprechend die Ausgangsdrossel schließt, so wird eingangsseitig der Druckabfall am Drosselelement abnehmen und ausgangsseitig zunehmen, entsprechend steigt der Innendruck im Druckraum, wobei die zunehmenden Druckkräfte auf den Seitenwandungen des Druckraums dem Achsschub entgegenwirken und so die Maschinenwelle auf die neutrale Position zurückführen. Die voranstehend genannten Axialschubentlastungseinrichtungen wirken jedoch nur in eine Richtung, so dass sie insbesondere für Turbomaschinen, etwa Dampfturbinen, dienen, für die konstruktionsbedingt ein einseitiger Axialschub vorliegt.

Eine bidirektionale, passive Axialschubentlastungseinrichtung wird durch die EP 0 461 131 B1 offenbart, wobei diese eine Axialschubentlastungseinrichtung mit integrierten Radial- und Axiallagern darstellt. Die Radial- und/oder die Axiallager dienen dabei gleichzeitig als Drosselelemente von Druckkammern, was zu einer kompakten Lagerungs- und Schubentlastungseinheit führt. Nachteilig an einem solchen Konzept ist jedoch, dass insbesondere bei schnell laufenden Maschinen aufgrund der eintretenden Lagerkräfte eine freie Einstellung der Drosselstellen nicht möglich ist, so dass eine Mischung aus Lagerung und Schubentlastung resultiert, die nicht zum Ziel eines möglichst verschwindenden Axialschubs führt. Darüber hinaus ist aufgrund der Doppelfunktion der Lager-/Drosselelemente ein hoher Volumenstrom des Druckmediums durch die Druckkammer nicht zu verhindern, so dass eine hohe Leckage für das Druckmedium resultiert. Demnach ist zur Aufrechterhaltung des Arbeitsdrucks des Druckmediums eine entsprechend dimensionierte Druckerzeugungsvorrichtung vorzusehen.

DE-A-2252495, zeigt ein Hydro- oder aerostatisches Lager zur Aufnahme radialer und/oder axialer Lasten, umfassend: ein Gehäuse (2) mit einem darin ausgebildeten Zuführungskanal (5) für ein Druckmedium, der stirnseitig am Gehäuse (2) in einen Ringraum (6) mündet; eine erste Seitenscheibe (3) und eine zweite Seitenscheibe (3), die jeweils axial benachbart und auf gegenüberliegenden Seiten des Zuführungskanals (5) und gegenüber dem Gehäuse (2) derart angeordnet sind, dass eine erste Druckkammer (8') und eine zweite Druckkammer (8") entstehen, wobei die erste Druckkammer (8') und die zweite Druckkammer (8") jeweils abstromseitig eine Lagerabflussspalte (9', 9") aufweisen und zustromseitig über eine erste Drosselstelle (7') für die erste Druckkammer (8') und eine zweite Drosselstelle (7") für die zweite Druckkammer (8") jeweils eine Verbindung zum Ringraum (6) für den Zustrom von Druckmedium besteht; aufgrund der Druckdifferenzen in den Druckkammern, die durch Veränderung der Drosselspalte und Lagerabflussspalte entsteht, wird eine Kraft die der auf die Maschinenwelle axial wirkende Kraft entgegenwirkt, verursacht.

Der Erfindung liegt die Aufgabe zugrunde, eine passive und demnach sich selbst einstellende Axialschubentlastungseinrichtung anzugeben, die bidirektionale axiale Schubkräfte auffängt. Diese sollte konstruktiv und fertigungstechnisch einfach sein sowie sich durch eine hohe Betriebssicherheit auszeichnen. Gemäß einer Weitergestaltung wird ferner eine Axialschubentlastungseinrichtung gesucht, die zur Verwendung in einem regelbaren Antrieb mit einer hydrodynamischen Komponente, etwa eines hydrodynamischen Wandler oder einer hydrodynamischen Kupplung, geeignet ist.

Die der Erfindung zugrunde liegende Aufgabe wird durch die Merkmale des unabhängigen Anspruchs 1 gelöst.

Die erfindungsgemäße Axialschubentlastungseinrichtung umfasst einen Schubausgleichsring, an den sich in Axialrichtung zu beiden Seiten Druckkammern anschließen. Demnach bilden die Seitenwandungen des Schubausgleichsrings jeweils im Wesentlichen eine Seitenwandung der Druckkammern, die nachfolgend als erste Druckkammer und zweite Druckkammer bezeichnet werden. In Axialrichtung werden die weiteren Seitenwandungen durch eine erste Seitenscheibe für die erste Druckkammer und eine zweite Seitenscheibe für die zweite Druckkammer gebildet. Gemäß einer ersten Ausgestaltung sind die Seitenscheiben so mit der Maschinenwelle verbunden, dass diese deren Axialbewegungen folgt. Bevorzugt sind die erste Seitenscheibe und die zweite Seitenscheibe jeweils als mit der Maschinenwelle umlaufende Elemente ausgebildet. Der Schubausgleichsring wird dann so angebracht, dass er den Axialbewegungen der Maschinenwelle nicht folgt, wobei der Schubausgleichsring bevorzugt feststeht. Gemäß einer alternativen Ausgestaltung wird der Schubausgleichsring als mit der Maschinenwelle umlaufend ausgebildet und die erste Seitenscheibe und die zweite Seitenscheibe sind jene Elemente, die feststehen.

Zum abstromseitigen Abschluss der ersten Druckkammer beziehungsweise der zweiten Druckkammer dienen jeweils Labyrinthdichtungen. Diese werden bevorzugt stirnseitig an der ersten Seitenscheibe beziehungsweise der zweiten Seitenscheibe angeordnet und erstrecken sich demnach parallel zur Axialrichtung der zugeordneten Maschinenwelle. Diese abstromseitigen Labyrinthdichtungen werden in ihrer Dichtfunktion im Wesentlichen nicht durch eine axiale Bewegung der Maschinen beeinflusst.

Auf der Zustromseite der Druckkammern ist eine erste Drosselstelle für die erste Druckkammer und eine zweite Drosselstelle für die zweite Druckkammer vorgesehen. Die erste Drosselstelle und die zweite Drosselstelle öffnen und schließen reziprok in Abhängigkeit der axialen Bewegung des Schubausgleichsrings relativ zu den Seitenscheiben. Gemäß einer bevorzugten Ausgestaltung ist im Schubausgleichsring wenigstens ein Zuführungskanal für ein Druckmedium vorgesehen, der in einen Ringraum mündet, welcher stirnseitig am Schubausgleichsring angebracht ist. In diesen Ringraum greift in Radialrichtung ein scheibenförmiges Drosselelement ein, das sich zusammen mit den Seitenscheiben bewegt. Demnach wird sich aufgrund einer axialen Bewegung der zugeordneten Maschinenwelle der Abstand zwischen einer Seitenwandung des Ringraums und der gegenüberliegenden Seitenwandung des scheibenförmigen Drosselelements verringern, während gleichzeitig auf der anderen Axialseite des scheibenförmigen Drosselelements der Abstand zur gegenüberliegenden Seitenwandung des Ringraums zunimmt. In diesem Bereich der axialen Relativbewegung entstehen die reziprok öffnenden und schließenden Drosselstellen. Dabei werden die erste Drosselstelle und die zweite Drosselstelle so ausgebildet, dass die Axialschubentlastungseinrichtung nur für geringe axiale Pendelbewegungen ausgelegt ist, typischerweise liegen diese unterhalb von 500 µm. Hierzu sind der ersten Drosselstelle und der zweiten Drosselstelle jeweils Dichtkanten zugeordnet, deren Verlauf bevorzugt V-förmig ist. Dabei ist es möglich, jeweils eine Dichtkante an den Seitenwandungen des Ringraums anzubringen, so dass diese gegen die Seitenwandungen des scheibenförmigen Drosselelements wirken. Alternativ werden die Dichtkanten den Drosselelementen zugeordnet und die Seitenwandungen des Ringraums bilden die entsprechenden Gegenflächen.

Die erste Drosselstelle öffnet und schließt demnach die Verbindung zur ersten Druckkammer. Entsprechendes gilt für die zweite Drosselstelle, die eine Verbindung zwischen dem Ringraum und der zweiten Druckkammer herstellt. Umfassen die Drosselstellen Dichtkanten, verändert sich der an diesen vorliegende Druckabfall auch für kleine axiale Relativbewegungen, so dass bereits für kleine Axialbewegungen der zugeordneten Maschinenwelle eine hinreichende Druckdifferenz zwischen der ersten Druckkammer und der zweiten Druckkammer entsteht. Hierbei ist es nicht notwendig, dass die Maschinenwelle rotiert. Stattdessen entstehen die für den Achsschubausgleich notwendigen Differenzdrücke in den Druckkammern durch ein Herausbewegen des scheibenförmigen Drosselelements aus der Neutralstellung in Axialrichtung.

Eine bevorzugte Verwendung der erfindungsgemäßen Axialschubentlastungseinrichtung besteht für Maschinen, die eine in Verbindung zu einer hydrodynamischen Komponente Kupplung stehende Maschinenwelle umfassen. Als hydrodynamische Komponente kommt insbesondere ein hydrodynamischer Wandler oder eine hydrodynamische Kupplung in Betracht. Beim Betrieb der hydrodynamischen Komponente wird das in diese einströmende Arbeitsmittel umgewälzt und verlässt den Arbeitsraum unter Druck, wobei vor einer Rezirkulation meist eine Kühleinrichtung durchlaufen wird. Das unter Druck stehende Arbeitsmittel kann unmittelbar der erfindungsgemäßen Axialschubentlastungseinrichtung als Druckmedium zugeführt werden. Eine solche Verwendung der erfindungsgemäßen Axialschubentlastungseinrichtung ist deshalb besonders vorteilhaft, da aufgrund der eingangsseitig vorgesehenen reziprok wirkenden Drosselstellen und den an den Druckkammern abstromseitig vorgesehenen konstanten Drosseln in Form von Labyrinthdichtungen der Volumenstrom des Druckmediums durch die Druckkammer gering ist. Darüber hinaus ist aufgrund der beidseitigen Anordnung der Druckkammern lediglich der Differenzdruck zwischen der ersten Druckkammer und der zweiten Druckkammer zur Realisierung eines Schubausgleichs relevant, so dass auch Schwankungen des Drucks des Druckmediums die Funktion der erfindungsgemäßen Axialschubentlastungseinrichtung nicht beeinträchtigen. Demnach kann vorteilhafterweise das Arbeitsmedium der hydrodynamischen Komponente verwendet werden, das je nach Betriebssituation der hydrodynamischen Komponente einer Druckschwankung unterliegen kann. Des Weiteren kann die erfindungsgemäße Axialschubentlastungseinrichtung für andere Maschinen, etwa Getriebe, in denen axiale Schubkräfte aufzufangen sind, verwendet werden.

Nachfolgend wird die Erfindung anhand einer Figurendarstellung genauer beschrieben. In dieser ist im Einzelnen Folgendes dargestellt:

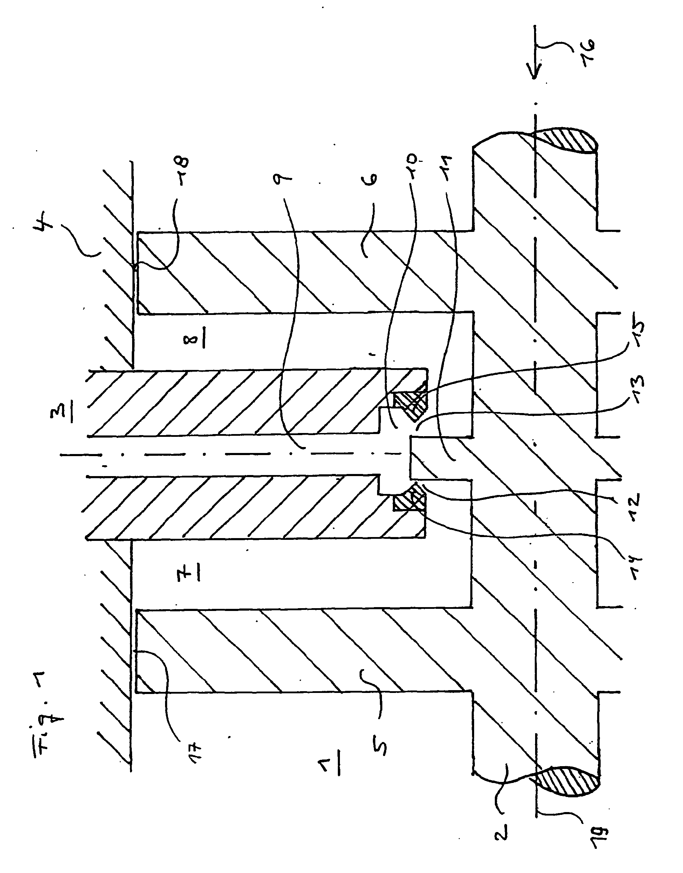

- Figur 1: zeigt einen Axialschnitt für eine bevorzugte Ausgestaltung der erfindungsgemäßen Axialschubentlastungseinrichtung.

In Figur 1 ist die erfindungsgemäße Axialschubentlastungseinrichtung 1 als Axialschnitt entlang der Längsachse der einen Maschinenwelle 19 dargestellt, wobei die Figurendarstellung nur eine der beiden Symmetriehälften zeigt.

Die erfindungsgemäße Axialschubentlastungseinrichtung 1 ist als separates Bauteil entlang einer Maschinenwelle 2 angeordnet, wobei die Axialschubentlastungseinrichtung 1 in Traktionsrichtung gesehen vor oder nach der den axialen Schub erzeugenden Maschinenkomponente vorgesehen sein kann.

Verwendet wird ein passives, sich selbst einstellendes System, für das zwei axial gegeneinander verschiebbare Komponentengruppen vorgesehen sind, wobei aus einer axialen Relativbewegung der beiden Komponentengruppen axiale Schubausgleichskräfte resultieren.

Für die vorliegende Ausgestaltung wird ein an einem ortsfesten Teil 4 feststehender Schubausgleichsring 3 verwendet, an den sich axial zu beiden Seiten eine erste Druckkammer 7 und eine zweite Druckkammer 8 anschließen. Die äußeren Seitenflächen des Schubausgleichsrings 3 stellen demnach für die erste Druckkammer 7 und die zweite Druckkammer 8 jeweils eine der beiden Seitenwandungen dar. Die andere Seitenwandung wird durch eine axiale Seitenfläche einer ersten Seitenscheibe 5 für die erste Druckkammer 7 und einer zweiten Seitenscheibe 6 für die zweite Druckkammer 8 gebildet. Die erste Seitenscheibe 5 und die zweite Seitenscheibe 6 sind auf der Maschinenwelle 2 befestigt oder einstückig mit dieser ausgebildet, so dass sie den Bewegungen der Maschinenwelle 2 folgen. Durch den mittels eines Pfeils angedeuteten axialen Schub 16 verschieben sich die erste Seitenscheibe 5 und die zweite Seitenscheibe 6 synchron in axialer Richtung relativ zum Schubausgleichsring 3. Die an der Stirnseite der ersten Seitenscheibe 5 vorgesehene erste Labyrinthdichtung 17 wird durch diese axiale Relativbewegung in ihrer Dichtfunktion im Wesentlichen nicht beeinflusst. Entsprechendes gilt für die zweite Labyrinthdichtung 18, die der zweiten Seitenscheibe 6 und damit der zweiten Druckkammer 8 zugeordnet ist. Aufgrund der damit im Wesentlichen konstant bleibenden Drosselwirkung durch die erste und die zweite Labyrinthdichtung 17, 18, kann eine Druckdifferenz zwischen der ersten Druckkammer 7 und der zweiten Druckkammer 8 durch ein reziprokes Öffnen beziehungsweise Schließen der Zuströmöffnungen zu den beiden Druckkammern 7, 8 erfolgen. Dies wird durch die Ausgestaltung der ersten Drosselstelle 12 für die erste Druckkammer 7 und die zweite Drosselstelle 13 für die zweite Druckkammer 8 bewirkt.

Gemäß der in Figur 1 dargestellten vorteilhaften Ausgestaltung greift ein scheibenförmiges Drosselelement 11 radial in einen Ringraum 10 ein, der stirnseitig am Schubausgleichsring 3 ausgebildet ist. Dieses scheibenförmige Drosselelement 11 läuft mit der Maschinenwelle 2 um und wird daher bei einer axialen Relativbewegung zwischen der Maschinenwelle 2 und dem feststehenden Schubausgleichsring 3 eine entsprechende axiale Bewegung im Ringraum 10 ausführen. Demnach ändert sich der Abstand zwischen den Seitenwandungen des scheibenförmigen Drosselelements 11 und den axialen Flächen des Ringraums 10.

Der Ringraum 10 wird mittels eines Zuführkanals 9, der im Schubausgleichsring 3 angelegt ist, mit Druckmedium versorgt. Sind an dessen Seitenwandungen jeweils eine erste Dichtkante 14 und eine zweite Dichtkante 15 angeordnet, die einen geringen Abstand zu den Seitenflächen des scheibenförmigen Drosselelements 11 aufweisen, so entstehen eine erste Drosselstelle 12 und eine zweite Drosselstelle 13, die aufgrund einer axialen Relativbewegung zwischen dem scheibenförmigen Drosselelement 11 und dem Schubausgleichsring 3 reziprok öffnen und schließen. Durch diese Relativbewegungen entsteht ein variabler Druckabfall an der ersten Drosselstelle 12 und der zweiten Drosselstelle 13. Entsprechend wird sich bei einer außermittigen Stellung des scheibenförmigen Drosselelements 11 innerhalb des Ringraums 10 eine Druckdifferenz zwischen der ersten Druckkammer 7 und der zweiten Druckkammer 8 einstellen. Aufgrund der im Wesentlichen gleichen Flächengrößen der zu den Druckkammern hingewandten axialen Flächen der ersten Seitenscheibe 5 und der zweiten Seitenscheibe 6 resultiert aus dieser Druckdifferenz eine Axialkraft, die dem axialen Schub 16 entgegenwirkt.

Die erste Drosselstelle 12 und die zweite Drosselstelle 13 können unterschiedlich gestaltet sein. Im vorliegenden Fall sind die Dichtkanten 14 und 15 den Seitenwandungen des Ringraums 10 zugeordnet. Alternativ können die Dichtkanten am scheibenförmigen Drosselelement 11 angeordnet sein oder die einander zugewandten axialen Seitenflächen des Ringraums 10 und des scheibenförmigen Drosselelements 11 können solchermaßen komplementär ausgestaltet sein, dass bei einer axialen Relativbewegung eine variable Drosselwirkung resultiert.

Gemäß einer vorteilhaften Ausgestaltung sind die Dichtkanten 14 und 15 entsprechend der Darstellung in Figur 1 als separate Bauteile ausgebildet, die mit den Innenwandungen des Ringraums 10 verbunden sind. Im einfachsten Fall erfolgt diese Verbindung mittels eines Befestigungselements, beispielsweise durch Verschrauben. Alternativ kann mittels eines Pressverbands eine reibschlüssige Verbindung geschaffen werden.

Die in Figur 1 gezeigten Abstände zwischen den Dichtkanten 14, 15 und den ihnen zugewandten Seitenflächen des scheibenförmigen Drosselelements 11 sind zur besseren Verständlichkeit übertrieben groß dargestellt. Für die erfindungsgemäße Axialschubentlastungseinrichtung 1 wird bevorzugt nur ein geringer axialer Pendelhub zugelassen, so dass die Relativbewegung in Axialrichtung der Maschinenwelle 2 zum feststehenden Schubausgleichsring 3 auf unterhalb 1 mm und bevorzugt auf kleiner als 500 µm begrenzt ist. Entsprechend werden die Abstände zwischen den Dichtkanten 14, 15 und den Seitenwandungen des scheibenförmigen Drosselelements 11 als geringe Spalte ausgebildet. Hierzu passend werden die erste Labyrinthdichtung 17 und die zweite Labyrinthdichtung 18 bezüglich ihrer konstanten Drosselwirkung angepasst. Dabei ist zu beachten, dass durch die Drehbewegungen der ersten Seitenscheibe 5 und der zweiten Seitenscheibe 6 bei einer rotierenden Maschinenwelle 2 das Druckmedium innerhalb der ersten Druckkammer 7 beziehungsweise der zweiten Druckkammer 8 ebenfalls in Rotation versetzt wird, so dass eine hieraus resultierende Druckerhöhung ebenfalls im Hinblick auf die Auslegung der Labyrinthdichtungen 17 und 18 sowie der ersten Drosselstelle 12 und der zweiten Drosselstelle 13 zu beachten ist.

Für die voranstehend dargestellte bevorzugte Ausgestaltung der Erfindung wird von einem feststehenden Schubausgleichsring 3 ausgegangen. Dies führt zu einer Anordnung, für welche die erste Drosselstelle 12 und die zweite Drosselstelle 13 radial innerhalb der ersten Labyrinthdichtung 17 und der zweiten Labyrinthdichtung 18 liegen. Demnach liegt die Zustromseite, die der Druckanpassung dient, auf einem kleineren Radius verglichen zur Abstromseite, was zu einer geringeren Relativgeschwindigkeit in Umfangsrichtung innerhalb der ersten Drosselstelle 12 beziehungsweise der zweiten Drosselstelle 13 im Vergleich zu den Labyrinthdichtungen 17, 18 an der Abstromseite führt. Dies ist vorteilhaft gegenüber der Ausgestaltungsalternative, für welche der Schubausgleichsring 3 mit der Maschinenwelle 2 umläuft, und die erste Seitenscheibe 5, die zweite Seitenscheibe 6 und das scheibenförmige Drosselelement 11 feststehen.

Besonders bevorzugt wird eine Weitergestaltung der Erfindung, bei der als Druckmedium das unter Druck stehende Arbeitsmittel einer weiteren Maschinenkomponente verwendet wird. Demnach besteht eine bevorzugte Anwendung der erfindungsgemäßen Axialschubentlastungseinrichtung 1 für Maschinen, die eine hydrodynamische Komponente, wie einen hydrodynamischen Wandler oder eine hydrodynamische Kupplung, aufweisen. Für diesen, im Einzelnen nicht in Figur 1 dargestellten Fall, kann eine Arbeitsmittelleitung für die hydrodynamische Komponente unmittelbar in Verbindung mit dem Zuführungskanal 9 gesetzt werden. Die Druckbeaufschlagung des Druckmediums erfolgt dann unmittelbar durch den Betrieb der hydrodynamischen Komponente, wobei Druckschwankungen aufgrund des Differenzdruckprinzips nicht zu einer Beeinträchtigung der Schubentlastung führen. Ferner kann die erfindungsgemäße Axialschubentlastungseinrichtung 1 auch für den Betriebsfall einer nicht rotierenden Maschinenwelle 2 verwendet werden.

Ein Beispiel für eine solche bevorzugte Anwendung der erfindungsgemäßen Axialschubentlastungseinrichtung 1 ist demnach ein regelbarer Antrieb, der einen hydrodynamischen Wandler oder eine hydrodynamische Kupplung umfasst. Dies kann beispielsweise eine Vorrichtung zur Drehzahl-/Drehmomentenwandlung sein, in der ein Überlagerungsgetriebe in Planetenbauweise vorgesehen ist. Für eine mit konstanter Geschwindigkeit umlaufende Antriebsmaschine wird der Hauptteil der Leistung mechanisch über das Planetengetriebe übertragen und ein kleinerer Teil zur Leistungs- und Drehzahlregelung mittels einer hydrodynamischen Komponente, beispielsweise eines hydrodynamischen Wandlers, abgezweigt und über ein Planetenstandgetriebe wieder dem Planetenumlaufgetriebe zugeführt. Für solche in der Energiewirtschaft, in der Öl- und Gasindustrie, der chemischen Industrie oder der Hüttentechnik eingesetzten regelbaren Antriebe, erzeugt die hydrodynamische Komponente einen in Größe und Richtung veränderlichen axialen Schub. Durch die als separates Bauteil an der mit der hydrodynamischen Komponente verbundenen Maschinenwelle angeordnete Axialschubentlastungseinrichtung 1 kann der axiale Schub bis auf Null reduziert werden, wodurch die Axiallager entlastet sind. Ferner wird die axiale Position der Maschinenwelle 2 im Wesentlichen auf einem Neutralpunkt gehalten, wobei als Druckmedium der Axialschubentlastungseinrichtung 1 unmittelbar das Arbeitsmedium aus der hydrodynamischen Komponente zugeführt wird.

### Bezugszeichenliste

- 1: Axialschubentlastungseinrichtung
- 2: Maschinenwelle
- 3: Schubausgleichsring
- 4: feststehender Teil
- 5: erste Seitenscheibe
- 6: zweite Seitenscheibe
- 7: erste Druckkammer
- 8: zweite Druckkammer
- 9: Zuführungskanal
- 10: Ringraum
- 11: scheibenförmiges Drosselelement
- 12: erste Drosselstelle
- 13: zweite Drosselstelle
- 14: erste Dichtkante
- 15: zweite Dichtkante
- 16: axialer Schub
- 17: erste Labyrinthdichtung
- 18: zweite Labyrinthdichtung
- 19: Längsachse der Maschinenwelle

## Patentansprüche

1. Axialschubentlastungseinrichtung für den Achsschubausgleich einer Maschinenwelle (2), umfassend:
einen Schubausgleichsring (3) mit einem darin ausgebildeten Zuführungskanal (9) für ein Druckmedium, der stirnseitig am Schubausgleichsring (3) in einen Ringraum (10) mündet;
eine erste Seitenscheibe (5) und eine zweite Seitenscheibe (6), die jeweils axial benachbart und auf gegenüberliegenden Seiten des Schubausgleichsrings (3) derart angeordnet sind, dass eine erste Druckkammer (7) und eine zweite Druckkammer (8) entstehen, wobei die erste Druckkammer (7) und die zweite Druckkammer (8) jeweils abstromseitig mittels einer Labyrinthdichtung (17, 18) abgeschlossen sind und zustromseitig über eine erste Drosselstelle (12) für die erste Druckkammer (7) und eine zweite Drosselstelle (13) für die zweite Druckkammer (8) jeweils eine Verbindung zum Ringraum (10) für den Zustrom von Druckmedium besteht;
ein in den Ringraum (10) eingreifendes scheibenförmiges Drosselelement (11);
der Schubausgleichsring (3) und das Drosselelement (11) sind so angeordnet, dass eine der beiden Komponenten in Axialrichtung feststeht und die andere Komponente einer Axialbewegung der zugeordneten Maschinenwelle (2) folgt, wobei durch eine axiale Relativbewegung zwischen dem Schubausgleichsring (3) und dem Drosselelement (11) die erste Drosselstelle (12) und die zweite Drosselstelle (13) reziprok geöffnet und geschlossen werden, so dass zwischen der ersten Druckkammer (7) und der zweiten Druckkammer (8) eine Druckdifferenz entsteht.

2. Axialschubentlastungseinrichtung nach Anspruch 1, **dadurch gekennzeichnet, dass** die erste Seitenscheibe (5) und die zweite Seitenscheibe (6) und das scheibenförmige Drosselelement (11) mit der Maschinenwelle (2) umlaufen und der Schubausgleichsring (3) feststehend ausgebildet ist.

3. Axialschubentlastungseinrichtung nach Anspruch 1, **dadurch gekennzeichnet, dass** die erste Seitenscheibe (5) und die zweite Seitenscheibe (6) und das scheibenförmige Drosselelement (11) feststehend ausgebildet sind und der Schubausgleichsring (3) mit der Maschinenwelle (2) umläuft.

4. Axialschubentlastungseinrichtung nach einem der vorhergehenden Ansprüche, **dadurch gekennzeichnet, dass** die erste Drosselstelle (12) und die zweite Drosselstelle (13) ringförmig verlaufende Dichtkanten (14, 15) umfassen, die mit den Seitenwandungen des Ringraums (10) oder des Drosselelements (11) verbunden sind.

5. Axialschubentlastungseinrichtung nach Anspruch 4, **dadurch gekennzeichnet, dass** die Dichtkanten (14, 15) form-, kraft- und/oder stoffschlüssig mit den Seitenwandungen des Ringraums (10) oder des Drosselelements (11) verbunden sind.

6. Regelbarer Antrieb, umfassend eine hydrodynamische Kupplung und/oder einen hydrodynamischen Wandler, die mit einer Maschinenwelle (2) verbunden sind und eine Axialschubentlastungseinrichtung (1) für die Maschinenwelle (2) nach einem der Ansprüche 1 bis 5, wobei das Arbeitsmittel des hydrodynamischen Wandlers oder der hydrodynamischen Kupplung als Druckmedium der Axialschubentlastungseinrichtung (1) dient.

7. Regelbarer Antrieb nach Anspruch 6, **dadurch gekennzeichnet, dass** die Druckbeaufschlagung des Druckmediums durch den hydrodynamischen Wandler oder die hydrodynamische Kupplung bewirkt wird.

## Claims

1. An axial thrust relief device for the axial thrust compensation of a machine shaft (2), comprising:
a thrust compensation ring (3) with a supply channel (9) formed therein, for a pressure medium, which emerges into an annular chamber (10) frontally by the thrust compensation ring (3);
a first side disk (5) and a second side disk (6), which are respectively axially close to one another and arranged on opposite sides of the thrust compensation ring (3) in such a way that a first pressure chamber (7) and a second pressure chamber (8) appear, whereas the first pressure chamber (7) and the second pressure chamber (8) are respectively closed downstream by means of a labyrinth seal (17, 18) and a connection is established with the annular chamber (10) for the inflow of pressure medium on the inflow side via a first throttle (12) for the first pressure chamber (7) and a second throttle (13) for the second pressure chamber (8);
a disk-shaped throttle element (11) meshing into the annular chamber (10);
the thrust compensation ring (3) and the throttle element (11) are arranged in such a way that one of both components is fixed in axial direction and the other component follows an axial movement of the associated machine shaft (2), whereas the first throttle (12) and the second throttle (13) are opened and closed reciprocally via an axial relative movement between the thrust compensation ring (3) and the throttle element (11) so that a differential pressure appears between the first pressure chamber (7) and the second pressure chamber (8).

2. An axial thrust relief device according to claim 1, **characterised in that** the first side disk (5) and the second side disk (6) and the disk-shaped throttle element (11) rotate with the machine shaft (2)and the thrust compensation ring (3) is arranged fixedly.

3. An axial thrust relief device according to claim 1, **characterised in that** the first side disk (5) and the second side disk (6) and the disk-shaped throttle element (11) are arranged fixedly and the thrust compensation ring (3) rotates with the machine shaft (2).

4. A axial thrust relief device according to any one of the preceding claims, **characterised in that** the first throttle (12) and the second throttle (13) contain sealed edges (14, 15) with annular contour, which are connected to the side walls of the annular chamber (10) or of the throttle element (11).

5. An axial thrust relief device according to claim 4, **characterised in that** the sealed edges (14, 15) are connected to the side walls of the annular chamber (10) or of the throttle element (11) in positive engagement, in a friction locking manner and/or by polymerisation.

6. An adjustable drive, including a hydrodynamic coupling and/or a hydrodynamic converter, which are connected with a machine shaft (2) and an axial thrust relief device (1) for the machine shaft (2) according to any of the claims 1 to 5, whereas the working medium of the hydrodynamic converter or of the hydrodynamic coupling serves as the pressure medium of the axial thrust relief device (1).

7. An adjustable drive according to claim 6, **characterised in that** the pressure medium is pressurised by the hydrodynamic converter or the hydrodynamic coupling.

## Revendications

1. Dispositif de relâchement de la poussée axiale pour la compensation de la poussée axiale d'un arbre machine (2), comprenant :
une bague de compensation de poussée (3) pourvue d'un canal d'arrivée (9) configuré dans celle-ci pour le milieu de pression, débouchant sur la face avant au niveau de la bague de compensation de poussée (3) dans une chambre annulaire;
un premier disque latéral (5) et un second disque latéral (6), qui sont respectivement axialement voisins et agencés sur des côtés opposés de la bague de compensation de poussée (3) de telle sorte qu'apparaissent une première chambre de pressurisation (7) et une seconde chambre de pressurisation (8), la première chambre de pressurisation (7) et la seconde chambre de pressurisation (8) étant chacune obturées au moyen d'un joint labyrinthe (17, 18) et une liaison avec la chambre annulaire (10) étant prévue pour l'arrivée de milieu de pression, au niveau de l'arrivée par le biais d'un premier étrangleur (12) pour la première chambre de pressurisation (7) et d'un second étrangleur (13) pour la seconde chambre de pressurisation (8);
un élément de type papillon (11) en forme de disque et s'engrenant dans la chambre annulaire (10);
la bague de compensation de poussée (3) et l'élément de type papillon (11) sont agencés de telle sorte que l'un des deux composants est bloqué dans la direction axiale et que l'autre composant suit le mouvement axial de l'arbre machine associé (2), le premier étrangleur (12) et le second étrangleur (13) s'ouvrant et se fermant réciproquement par un mouvement relatif axialement entre la bague de compensation de poussée (3) et l'élément de type papillon (11), de sorte qu'une pression différentielle apparaît entre la première chambre de pressurisation (7) et la seconde chambre de pressurisation (8).

2. Dispositif de relâchement de la poussée axiale selon la revendication 1, **caractérisé en ce que** le premier disque latéral (5) et le second disque latéral (6) ainsi que l'élément de type papillon en forme de disque (11) tournent avec l'arbre machine (2) et que la bague de compensation de poussée (3) est fixée à demeure.

3. Dispositif de relâchement de la poussée axiale selon la revendication 1, **caractérisé en ce que** le premier disque latéral (5) et le second disque latéral (6) ainsi que l'élément de type papillon en forme de disque (11) sont fixés à demeure et la bague de compensation de poussée (3) tourne avec l'arbre machine (2).

4. Dispositif de relâchement de la poussée axiale selon l'une des revendications précédentes, **caractérisé en ce que** le premier étrangleur (12) et le second étrangleur (13) comprennent des arêtes d'étanchéité (14, 15) au contour annulaire, arêtes reliées aux parois latérales de la chambre annulaire (10) ou bien de l'élément de type papillon (11).

5. Dispositif de relâchement de la poussée axiale selon la revendication 4, **caractérisé en ce que** les arêtes d'étanchéité (14, 15) sont reliées aux parois latérales de la chambre annulaire (10) ou bien de l'élément de type papillon (11) par engagement positif, par liaison de force et/ou par polymérisation.

6. Entraînement réglable, comportant un embrayage hydrodynamique et/ou un convertisseur hydrodynamique, tous deux reliés à un arbre machine (2) et un dispositif de relâchement de la poussée axiale (1) pour l'arbre machine (2) selon l'une des revendications 1 à 5, dans lequel les moyens de travail du convertisseur hydrodynamique ou de l'embrayage hydrodynamique servent de milieu de pression pour le dispositif de relâchement de la poussée axiale (1).

7. Entraînement réglable selon la revendication 6, **caractérisé en ce que** le milieu de pression est soumis à une pression par le convertisseur hydrodynamique ou l'embrayage hydrodynamique.
